# EUROPEAN PATENT SPECIFICATION

(11) **EP 4 167 330 B1**
(45) Date of publication and mention of the grant of the patent: **19.11.2025**
(21) Application number: 21824782.3
(22) Date of filing: 14.06.2021
(51) Int. Cl.: H01M 10/42

(54) **SECONDARY BATTERY AND METHOD FOR MANUFACTURING THE SAME**
SEKUNDÄRBATTERIE UND VERFAHREN ZUR HERSTELLUNG
BATTERIE SECONDAIRE ET SON PROCÉDÉ DE FABRICATION

(30) Priority: 15.06.2020 KR 20200072599
(43) Date of publication of application: 19.04.2023
(73) Proprietor: LG Energy Solution, Ltd., Seoul 07335 (KR)
(72) Inventor: YU, Dae Eun, Daejeon 34122 (KR); LEE, Yong Gon, Daejeon 34122 (KR); JUNG, Yeong Hun, Daejeon 34122 (KR)
(74) Representative: Goddar, Heinz J.
(86) International application number: PCT/KR2021/007400
(87) International publication number: WO 2021/256804

(56) References cited:
- EP-A1- 2 814 090
- FR-A1- 2 936 653
- JP-A- 2003 217 671
- JP-A- 2012 134 047
- JP-B2- 4 383 781
- KR-A- 20150 015 303
- KR-A- 20190 060 214
- KR-A- 20200 051 377
- KR-B1- 100 416 093
- KR-B1- 101 750 089

## Description

### TECHNICAL FIELD

The present invention relates to a secondary battery and a method for manufacturing the same, and more particularly, to a secondary battery in which a swelling phenomenon of an electrode assembly is prevented, and a plurality of unit cells are be laminated due to a pressure inside a battery case, and a method for manufacturing the same.

### BACKGROUND ART

In general, secondary batteries include nickel-cadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the lithium secondary battery, first, electrode active material slurry is applied to a positive electrode collector and a negative electrode collector to manufacture a positive electrode (cathode) and a negative electrode (anode). Then, the electrodes are laminated on both sides of a separator form an electrode assembly. Also, the electrode assembly is accommodated in a battery case, and then the battery case is sealed after an electrolyte is injected therein.

Such a secondary battery is classified into a pouch type secondary battery and a can type secondary battery according to a material of a case accommodating the electrode assembly. In the pouch-type secondary battery, the electrode assembly is accommodated in a pouch made of a flexible polymer material having a variable shape. Also, in the can type secondary battery, an electrode assembly is accommodated in a case made of a metal or plastic material having a predetermined shape. The can type secondary battery is classified into a prismatic type secondary battery in which the case has a polygonal shape and a cylinder type secondary battery in which the case has a cylindrical shape according to the shape of the case.

In the pouch type secondary battery, an injection hole is sealed after an electrolyte is injected into a pouch type battery case, and then, a formation process is performed. Also, a hole is punched in a degassing part formed at one side of the pouch to perform a degassing process for discharging a gas generated in the battery. Thereafter, the pouch is re-sealed, and the degassing part is removed.

As described above, in the pouch type secondary battery, since the formation process is performed after the injection hole is completely closed, a charging rate may be high, and the gas may be quickly discharged. Thus, the secondary battery may be manufactured within a predetermined process time.

However, in a can type secondary battery, when an electrolyte is injected into a can type battery case, and a formation process is performed, an injection hole may not be completely closed. If the formation process is performed after the injection hole is completely closed, unlike the pouch type battery case, if a volume of the battery case is expanded once due to generation of a gas, it is very difficult to return to its original state after the degassing process.

In addition, since the can type battery case is made of a material having rigidity such as a metal or plastic, it is impossible to reseal the battery case after the degassing hole is punched. Therefore, before closing the injection hole, a primary electrolyte is first injected, and a formation process is performed in a dry room to prevent moisture from being permeated. Then, after the gas is discharged to some extent, a secondary electrolyte is injected, and the injection hole is closed.

However, when the above-described method is performed, in order to complete the manufacture of the secondary battery within a predetermined process time, the injection hole has to be closed in a state in which the gas is not completely discharged. Thus, only a portion of the gas is discharged, and the gas partially remains within the case. As a swelling phenomenon in which the electrode assembly swells by the remaining gas occurs, there is a problem in that the manufactured secondary battery increases in thickness.

### [PRIOR ART DOCUMENTS]

### [PATENT DOCUMENTS]

Korean Patent Registration No. 1002783

EP 2 814 090 A1 Provides a method for manufacturing a film-wrapped electrical device, including: a first injection step of depressurizing, to a given pressure lower than atmospheric pressure, the inside of an injection chamber in which a bag-shaped laminate film wrapping member is placed, the laminate film wrapping member having an opening portion and housing an electrode assembly including a positive electrode and a negative electrode stacked with a separator therebetween, and injecting part of a predetermined injection amount of an electrolyte solution into the wrapping member through the opening portion; and a second injection step of, after the first injection step, pressurizing the inside of the injection chamber to a pressure higher than the given pressure and injecting the rest of the predetermined injection amount of the electrolyte solution.

JP 2012 134 047 A discloses a method capable of preventing scattering and wetting of an electrolyte solution onto an adhesion inhibition part where the electrolyte solution of a battery container must not be adhered in a liquid injection process, and capable of injecting a specified quantity of the electrolytic solution quickly. The method of manufacturing a secondary battery seals an electrode plate group and the electrolyte solution into a battery container. In a liquid injection process in which the electrolyte solution is injected into the battery container into which the electrode plate group is inserted, the method includes: a step in which the inside of the battery container is decompressed to keep the pressure thereof to be negative; a step of injecting the amount of electrolyte solution into the battery container; and a step in which the inside of the battery container is increased in pressure to keep the pressure thereof to be positive and returned to the ambient atmosphere by a plurality of stepwise decompression from high pressure.

### DISCLOSURE OF THE INVENTION

### TECHNICAL PROBLEM

An object of the present invention is to provide a method for manufacturing a secondary battery in which a swelling phenomenon of an electrode assembly is prevented, and a plurality of unit cells are be laminated due to a pressure inside a battery case.

### TECHNICAL SOLUTION

The invention is defined in the appended claims. A method for manufacturing a secondary battery according to an embodiment of the present invention for achieving the above object includes: (S101) accommodating an electrode assembly, in which electrodes and separators are alternately stacked, in a can type battery case (12); (S102) primarily injecting an electrolyte through an injection hole (111); (S103, S104) applying a pressure to the battery case (12) while performing a formation process in a state in which the injection hole (111) is opened; (S105) secondarily injecting the electrolyte through the injection hole (111); and closing the injection hole (111), wherein the electrode assembly is a stack type electrode assembly in which at least portions of the electrodes and the separators are laminated; and wherein the applying of the pressure while performing the formation process comprises: (S103) applying a primary pressure as a first pressure while performing a primary formation process; (S104) applying a secondary pressure as a second pressure that is greater than the first pressure while performing a secondary formation process; and wherein a primary and secondary pressure is applied to the secondary battery 1 by using a jig 2.

In addition, the first pressure may be 49 kPa (0.5 kgf/cm²) to 98 kPa (1 kgf/cm²), and the second pressure may be 441 kPa (4.5 kgf/cm²) to 980 kPa (10 kgf/cm²) .

In addition, in the performing of the primary formation process, a charging rate may be 23% or less.

In addition, in the performing of the secondary formation process, a charging rate may be 70% or less.

In addition, in the applying of the pressure while performing the formation process, the battery case may be heated.

In addition, the battery case may be heated at a temperature of 55°C to 65°C.

In addition, the method may further include performing aging after the primarily injecting of the electrolyte and before the applying of the pressure while performing the formation process.

In addition, in the performing of the aging, a temperature for the aging may be 20°C to 30°C.

In addition, in the secondarily injecting of the electrolyte, a gas remaining in the battery case may be discharged to the outside.

A secondary battery according to an embodiment of the present invention for achieving the above object is obtained by the method of the present invention and includes: a stack type electrode assembly, in which electrodes and separators are alternately stacked, wherein at least portions of the electrodes and the separators are laminated with each other; and a can type battery case (12) in which the electrode assembly is accommodated and which has a constant outer appearance.

Other particularities of the embodiments are included in the detailed description and drawings.

### ADVANTAGEOUS EFFECTS

According to the embodiments of the present invention, there are at least the following effects.

Since the secondary battery is pressed while performing the formation process of the can type secondary battery, the gas may be effectively discharged to the outside to prevent the electrode assembly from swelling and to shorten the manufacturing process.

In addition, even if the stack type electrode assembly, not the jelly roll type electrode assembly, is accommodated in the can type battery case, the plurality of unit cells may be laminated due to the pressure inside the battery case.

The effects of the prevent invention are not limited by the aforementioned description, and thus, more varied effects are involved in this specification.

### BRIEF DESCRIPTION OF THE DRAWINGS

FIG. 1 is a flowchart illustrating a method for manufacturing a secondary battery according to an embodiment of the present invention.
FIG. 2 is a schematic view illustrating a state in which an electrolyte is primarily injected into the secondary battery according to an embodiment of the prevent invention.
FIG. 3 is a schematic view illustrating a state in which a can type secondary battery swells.
FIG. 4 is a schematic view illustrating a state in which the secondary battery is pressed by a jig according to an embodiment of the present invention.
FIG. 5 is a schematic view illustrating a state in which an electrolyte is secondarily injected into the secondary battery according to an embodiment of the prevent invention.

### MODE FOR CARRYING OUT THE INVENTION

Advantages and features of the present invention, and implementation methods thereof will be clarified through following embodiments described with reference to the accompanying drawings. These embodiments are provided so that this disclosure will be thorough and complete, and will fully convey the scope of the present invention to those skilled in the art. Further, the present invention is only defined by scopes of claims. Like reference numerals refer to like elements throughout.

Unless terms used in the present invention are defined differently, all terms (including technical and scientific terms) used herein have the same meaning as generally understood by those skilled in the art. Also, unless defined clearly and apparently in the description, the terms as defined in a commonly used dictionary are not ideally or excessively construed as having formal meaning.

In this specification, the terms of a singular form may include plural forms unless specifically mentioned. The meaning of "includes (comprises)" and/or "including (comprising)" does not exclude other components besides a mentioned component.

Hereinafter, preferred embodiments will be described in detail with reference to the accompanying drawings.

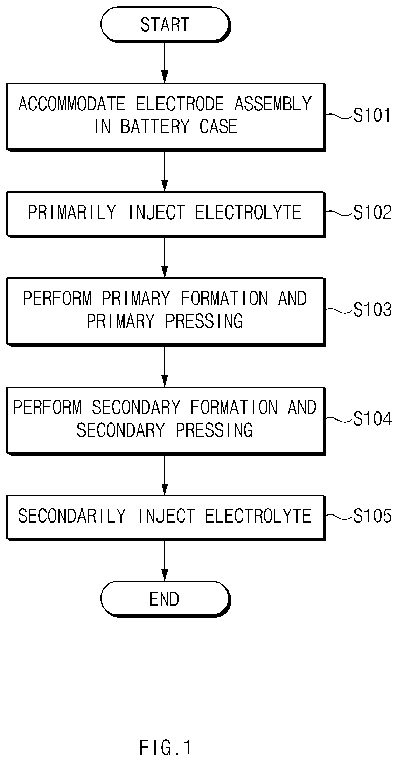

FIG. 1 is a flowchart illustrating a method for manufacturing a secondary battery 1 according to an embodiment of the present invention.

According to the present invention, since the secondary battery 1 is pressed while performing a formation process of a can type secondary battery 1, a gas may be effectively discharged to the outside to prevent the electrode assembly from swelling and to shorten a manufacturing process. In addition, even if a stack type electrode assembly, not a jelly roll type electrode assembly, is accommodated in a can type battery case 12, a plurality of unit cells may be laminated due to a pressure inside a battery case 12.

For this, as illustrated in FIG. 1, a method for manufacturing a secondary battery 1 according to the present invention includes: (S101) a process of accommodating an electrode assembly, in which electrodes and separators are alternately stacked, in a can type battery case 12; (S102) a process of primarily injecting an electrolyte through an injection hole 111; (S103, S104) a process of applying a pressure to the battery case 12 while performing a formation process in a state in which the injection hole 111 is opened; (S105) a process of secondarily injecting the electrolyte through the injection hole 111, and a process of closing the injection hole 111. In addition, the process of applying the pressure while performing the formation process includes (S103) a process of primarily applying a first pressure while performing a primary formation process; and (S104)a process of secondarily applying a second pressure that is greater than the first pressure while performing a secondary formation process.

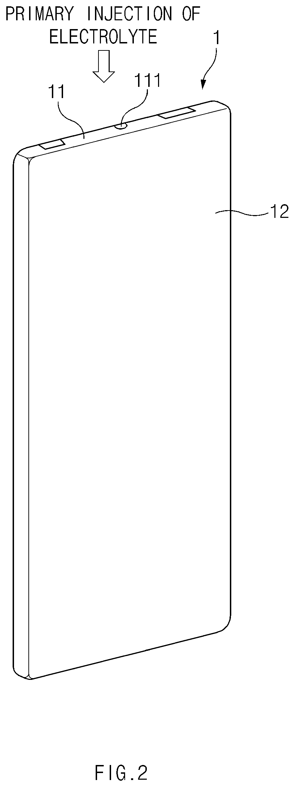

Hereinafter, each of the processes illustrated in the flowchart of FIG. 1 will be described with reference to FIGS. 2 to 5.

FIG. 2 is a schematic view illustrating a state in which the electrolyte is primarily injected into the secondary battery 1 according to an embodiment of the prevent invention.

A method for manufacturing the secondary battery 1 according to an embodiment of the present invention is largely classified into three processes such as an electrode plate process, an assembly process, and a formation process. The electrode plate process is a process of manufacturing a positive electrode and a negative electrode. Here, an active material may be applied to a base material to manufacture the positive electrode and the negative electrode.

The assembly process is a process of assembling the secondary battery 1. First, the positive and negative electrodes, which are manufactured as described above, and the separators may be alternately stacked to manufacture the electrode assembly. The electrode assembly is classified into a jelly roll type electrode assembly formed by stacking a long electrode sheet and separator sheet and then winding the sheets and a stack type electrode assembly in which at least portions of the plurality of electrodes and separators are laminated to be bonded to each other according to shapes of the electrode assembly.

In general, the jelly roll type electrode assembly is used in a can type secondary battery, and a stack type electrode assembly is used in a pouch type secondary battery. As described above, in the can type secondary battery, an injection hole is not completely closed while performing the formation process, and thus, a gas may partially remain inside the battery case. However, in the jelly roll type electrode assembly, since the laminating is not performed, there is no bonding between the electrode and the separator, and also, even if a gas is generated after the formation process, the gas may be smoothly discharged to the outside, and thus, since an amount of gag trapped in the battery case is small, a swelling phenomenon does not occur often.

However, in the jelly roll type electrode assembly, there is a problem in that the electrode and the separator are not bonded to each other, and thus, mobility of ions is lowered, and an energy density is also lowered. In addition, since a shape changes such as winding of the electrode, such as being wound, there is high possibility of occurrence of damage and cracks of the electrode.

On the other hand, in the stacked electrode assembly, since at least a portion is bonded by laminating the electrodes and the separators, an amount of gas trapped between the electrodes and the separators may be large when the formation process is performed. However, in the pouch type secondary battery, the formation process is performed after the battery case is completely sealed. In addition, the gas may be smoothly discharged to the outside through a separate degassing process to be later. Thus, the stack type electrode assembly having high energy density and low possibility of occurrence of damage may be used.

However, according to the present invention, in spite of the can type secondary battery 1, the stack type electrode assembly in which at least a portion of the electrodes and the separators is laminated is used. Therefore, the energy density is higher, and the possibility of occurrence of damage is low when compared to the can type secondary battery according to the related art. However, the gas generated in the formation process has to be more smoothly discharged.

According to the method for manufacturing the secondary battery 1 according to an embodiment of the present invention, first, the stack type electrode assembly is accommodated therein through an opening of the can type battery case 12, and the opening of the battery case 12 is covered (S101). When covering the opening of the battery case 12, a top cap assembly 11 or the like may be used. In addition, the opening of the battery case 12 may be covered by welding an outer wall of the battery case 12 to the top cap assembly 11.

As illustrated in FIG. 2, in the can type secondary battery 1 according to an embodiment of the present invention, the battery case 12 is made of a material having rigidity, such as a metal or plastic and thus is constantly maintained in outer appearance thereof. Although a prismatic type battery having a polyhedron or polygonal column shape is illustrated in FIG. 2, the embodiment of the present invention is not limited thereto. For example, the battery case 12 may be a cylinder type battery having a cylindrical shape. That is, if the battery case 12 is provided in the can type having a predetermined shape, various kinds of secondary batteries 1 may be provided without limitation.

As illustrated in FIG. 2, the electrolyte is primarily injected through the injection hole 111 formed in the battery case 12 (S102). Here, when primarily injecting the electrolyte, only a small amount of electrolyte has to be injected. If a large amount of electrolyte is injected, when a gas is discharged through the injection hole 111 later, the electrolyte injected into the battery case 12 may be discharged together with the gas to the outside by overflow. In addition, when the electrolyte is primarily injected, a pressure may be lowered so that the surroundings are close to a vacuum state. Therefore, impregnability of the electrolyte may be further improved.

After the secondary battery 1 is completely assembled as described above, a formation process is performed. The formation process is a process of forming an SEI layer on a surface of electrode plates of the electrode assembly to have electric charges. Thus, the secondary battery 1 may be finally charged through the formation process to supply power. As described above, in the can type secondary battery 1, the formation process may be performed without closing the injection hole 111. Here, in order to prevent moisture from being permeated, the formation process may be performed in a dry room.

After primarily injecting the electrolyte, and before performing the formation process, an aging process may be performed. The aging process is a process of storing the assembled secondary battery 1 for a predetermined time at specific temperature and humidity. Here, the electrolyte is sufficiently dispersed in the secondary battery 1 to optimize movement of ions. According to an embodiment of the present invention, the temperature for performing such the aging process may be between 20°C to 30°C, in particular, preferably 25°C.

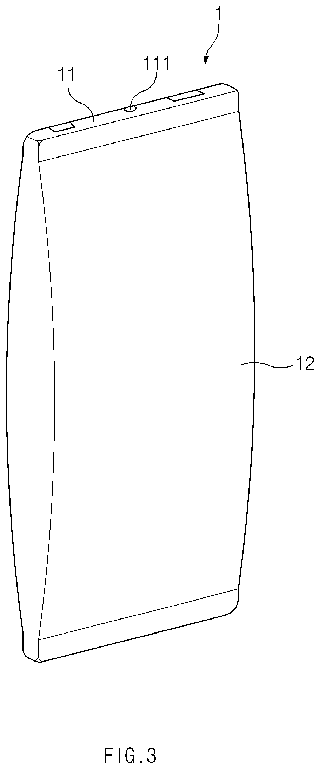

FIG. 3 is a schematic view illustrating a state in which the can type secondary battery swells.

When the formation process is performed, a gas may be generated inside the battery case 12. In order to easily discharge the gas to the outside, when performing the formation process, the injection hole 111 is not closed, but is maintained in an open state.

However, as described above, in order to complete the manufacture of the secondary battery 1 within the predetermined process time, only a portion of the gas may be discharged, and then, the injection hole 111 may be closed so that the gas partially remains inside the battery case 12. In particular, as described above, when the stack type electrode assembly is used in the can type secondary battery 1, an amount of gas trapped between the electrodes and the separators in the gas generated by performing the formation process may be large. As a swelling phenomenon in which the electrode assembly swells by the gas occurs, as illustrated in FIG. 3, a problem in that the secondary battery 1 increases in thickness.

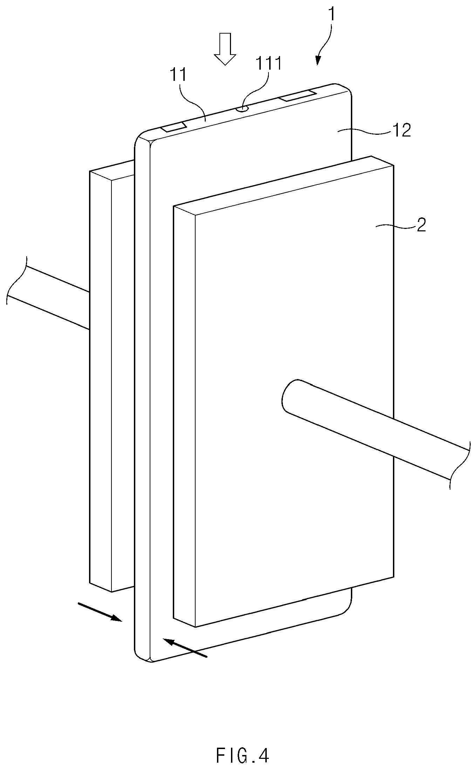

FIG. 4 is a schematic view illustrating a state in which the secondary battery 1 is pressed by a jig according to the present invention.

According to the present invention, as illustrated in FIG. 4, while the formation process is performed in the state in which the injection hole 111 is opened, a pressure is applied to the secondary battery 1 by using a jig 2.

Specifically, when a pressure is applied while performing the formation process, a first pressure is primarily applied while performing a first formation process (S103), and then a second pressure that is greater than the first pressure is secondarily applied while performing a second formation process (S104).

First, in order to perform the formation process on the secondary battery 1, an electrode terminal of the secondary battery 1 is connected to an external power source, and simultaneously, the secondary battery 1 is installed between the jigs 2. Then, while performing the first formation process, a primary pressure is applied as the first pressure. Here, when the primary formation process is performed, a large amount of gas is generated and then discharged to the outside through the opened injection hole 111. Thus, the first pressure for applying the primary pressure may be relatively weak that is enough to prevent the outer appearance of the secondary battery 1 from being deformed only by a large amount of gas. That is, the first pressure may be 49 kPa (0.5 kgf/cm²) to 98 kPa (1 kgf/cm²), in particular, preferably 49 kPa (0.5 kgf/cm²) to 69 (0.7 kgf/cm²). If the first pressure is less than 49 kPa (0.5 kgf/cm²), even if the injection hole 111 is opened, the outer appearance of the secondary battery 1 may be deformed by the large amount of gas. Conversely, if the first pressure is greater than 98 kPa (1 kgf/cm²), there is no significantly different effect compared to the case of the pressure of 98 kPa (1 kgf/cm²) .

Then, the secondary pressure is applied while performing a secondary formation process. When a large amount of gas is generated, a portion of the gas may remain inside the battery case 12 or may be trapped in the electrode assembly. Thus, the second pressure for applying the secondary pressure may be relatively strong that is enough to allow the gas to remain inside the battery case 12 or to maximally discharge the trapped gas. That is, the second pressure may be 441 kPa (4.5 kgf/cm²) to 980 kPa (10 kgf/cm²), in particular, preferably 490 kPa (5.0 kgf/cm²) to 686 kPa (7.0 kgf/cm²). If the second pressure is less than 441 kPa (4.5 kgf/cm²), the remaining or trapped gas may not be smoothly discharged to the outside. Conversely, if the second pressure is greater than 980 kPa (10 kgf/cm²), the can type battery case 12 may be recessed inward and deformed, and also, the electrolyte inside the battery case 12 may be discharged to the outside.

According to another embodiment of the present invention, when a pressure is applied while performing the formation process as described above, the secondary battery 1 may be heated at a high temperature. The electrode assembly according to embodiments of the present invention is the stack type electrode assembly, and the stack type electrode assembly is formed by laminating at least a portion of the plurality of electrodes and separators. However, in the stack type electrode assembly, a non-laminated portion may exist, and as the electrode assembly increases in thickness, the non-laminated portion may increase.

In particular, the stack type electrode assembly includes a lamination & stack type electrode assembly, in which unit cells are stacked after the unit cells are manufactured, and a stack & folding type electrode assembly, in which a plurality of unit cells are attached to be spaced apart from each other on one surface of a separator sheet that is a long length in one direction, and then, the separator sheet is repeatedly folded from one end thereof in the same direction. In the case of the lamination & stack type or stack & folding type electrode assembly, the electrodes and the separators inside the unit cells may be easily bonded by a laminating process, but after the unit cells are stacked, the electrodes and the separators of the unit cells may not be easily bonded through the laminating process because the electrodes and the separators are already thick.

Therefore, when a pressure is applied while performing the formation process, the secondary battery 1 may be heated at a high temperature to discharge the remaining or trapped gas to the outside and also to additionally laminate non-laminated portion of the electrode assembly. When heating the secondary battery 1, it is preferable to heat the secondary battery 1, particularly, when applying the secondary pressure as the relatively strong second pressure, and the temperature is heated to 55°C to 65°C. If the heating temperature is lower than 55°C, an effect of the laminating may be reduced. Conversely, if the heating temperature is higher than 65°C, the internal electrolyte may be evaporated, or the electrode assembly may be damaged.

It is preferable that the jig 2 for pressing the secondary battery 1 has a flat pressing surface to uniformly press the entire surface of both surfaces of the secondary battery 1. Also, as illustrated in FIG. 4, the jig 2 moves toward the secondary battery 1 to apply a pressure. In addition, after a predetermined time elapses, the jig 2 moves in a direction opposite to the secondary battery 1 to remove the pressure applied to the secondary battery 1. The jig 2 may also reciprocate in a vertical direction and a horizontal direction. Therefore, the pressure may be intensively applied to any position of the battery case 12 or an appropriate point intended by a user. In order for allowing the jig 2 to move easily in various directions, a piston or the like may be connected to an opposite surface of the pressing surface of the jig 2. In addition, the jig 2 may move by the piston in various manners without limitation, such as a mechanical system, a hydraulic system, and the like.

When performing the primary formation process, a charging rate may be approximately 23% or less, preferably 17% or less. In addition, when performing the secondary formation process, the charging rate may be higher than the above-described charging rate, for example, about 70% or less, preferably 65% or less.

As described above, according to an embodiment of the present invention, the formation process is performed in a state in which the injection hole 111 of the can type secondary battery 1 is opened, and the gas may be discharged to the outside through the injection hole 111. In addition, since the secondary battery 1 is pressed while performing the formation process, the gas may be discharged to the outside as much as possible. Thus, the gas remaining in the battery case 12 may be reduced to be minimized, thereby preventing the secondary battery 1 from increasing in thickness. In addition, even if a stack type electrode assembly, not a jelly roll type electrode assembly, is accommodated in a can type battery case 12, a plurality of unit cells may be laminated due to a pressure 12 inside a battery case.

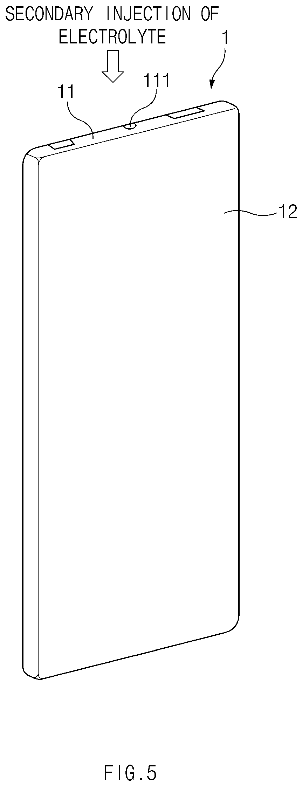

FIG. 5 is a schematic view illustrating a state in which the electrolyte is secondarily injected into the secondary battery 1 according to an embodiment of the prevent invention.

When the formation process is completed, as illustrated in FIG. 5, the electrolyte is injected secondarily. According to an embodiment of the present invention, even when the electrolyte is injected secondarily, the pressure may be lowered to be close to a vacuum state around the surroundings, or an injection device for secondarily injecting the electrolyte may suction the gas while injecting the electrolyte. Therefore, the gas still remaining inside the battery case 12 may be further discharged.

After the secondary injection of the electrolyte, the injection hole 111 is closed. As a result, the secondary battery 1 according to an embodiment of the present invention may be completely manufactured.

### [Description of the Symbols]

| | | | |
|---|---|---|---|
| 1: | Secondary battery | 2: | Jig |
| 11: | Top cap assembly | 12: | Battery case |
| 111 : | Injection hole | | |

## Claims

1. A method for manufacturing a secondary battery (1), the method comprising:
(S101) accommodating an electrode assembly, in which electrodes and separators are alternately stacked, in a can type battery case (12);
(S102) primarily injecting an electrolyte through an injection hole (111);
(S103, S104) applying a pressure to the battery case (12) while performing a formation process in a state in which the injection hole (111) is opened;
(S105) secondarily injecting the electrolyte through the injection hole (111); and
closing the injection hole (111),
wherein the electrode assembly is a stack type electrode assembly in which at least portions of the electrodes and the separators are laminated; and
wherein the applying of the pressure while performing the formation process comprises:
(S103) applying a primary pressure as a first pressure while performing a primary formation process;
(S104) applying a secondary pressure as a second pressure that is greater than the first pressure while performing a secondary formation process; and
wherein a primary and secondary pressure is applied to the secondary battery 1 by using a jig 2.

2. The method of claim 1, wherein the first pressure is 49 kPa (0.5 kgf/cm²) to 98 kPa (1 kgf/cm²), and
wherein the second pressure is 441 kPa (4.5 kgf/cm²) to 980 (10 kgf/cm²) .

3. The method of claim 1, wherein, in the performing of the primary formation process, a charging rate is 23% or less.

4. The method of claim 3, wherein, in the performing of the secondary formation process, a charging rate is 70% or less.

5. The method of claim 1, wherein, in the applying of the pressure while performing the formation process, the battery case is heated.

6. The method of claim 5, wherein the battery case is heated at a temperature of 55°C to 65°C.

7. The method of claim 1, further comprising performing aging after the primarily injecting of the electrolyte and before the applying of the pressure while performing the formation process.

8. The method of claim 7, wherein, in the performing of the aging, a temperature for the aging is 20°C to 30°C.

9. The method of claim 1, wherein, in the secondarily injecting of the electrolyte, a gas remaining in the battery case (12) is discharged to the outside.

## Patentansprüche

1. Verfahren zum Herstellen einer Sekundärbatterie (1), wobei das Verfahren umfasst:
(S101) Aufnehmen einer Elektrodenanordnung, in der Elektroden und Separatoren abwechselnd gestapelt sind, in einem Batteriegehäuse (12) vom Büchsentyp;
(S102) primäres Einspritzen eines Elektrolyten durch ein Einspritzloch (111);
(S103, S104) Ausüben eines Drucks auf das Batteriegehäuse (12), während ein Bildungsprozess in einem Zustand durchgeführt wird, in dem das Einspritzloch (111) geöffnet ist;
(S105) sekundäres Einspritzen des Elektrolyten durch das Einspritzloch (111); und
Schließen des Einspritzlochs (111),
wobei die Elektrodenanordnung eine Elektrodenanordnung vom Stapeltyp ist, in der zumindest Abschnitte der Elektroden und der Separatoren laminiert sind; und
wobei das Ausüben des Drucks während des Durchführens des Bildungsprozesses umfasst:
(S103) Ausüben eines Primärdrucks als einen ersten Druck während des Durchführens eines primären Bildungsprozesses;
(S104) Ausüben eines Sekundärdrucks als einen zweiten Druck, der größer als der erste Druck ist, während des Durchführens eines sekundären Bildungsprozesses; und
wobei ein Primär- und ein Sekundärdruck auf die Sekundärbatterie 1 unter Verwendung einer Spannvorrichtung 2 ausgeübt werden.

2. Verfahren nach Anspruch 1, bei dem der erste Druck 49 kPa (0,5 kgf/cm²) bis 98 kPa (1 kgf/cm²) beträgt, und bei dem der zweite Druck 441 kPa (4,5 kgf/cm²) bis 980 kPa (10 kgf/cm²) beträgt.

3. Verfahren nach Anspruch 1, bei dem beim Durchführen des primären Bildungsprozesses eine Laderate 23% oder weniger beträgt.

4. Verfahren nach Anspruch 3, bei dem beim Durchführen des sekundären Bildungsprozesses eine Laderate 70% oder weniger beträgt.

5. Verfahren nach Anspruch 1, bei dem beim Ausüben des Drucks während des Durchführens des Bildungsprozesses das Batteriegehäuse erwärmt wird.

6. Verfahren nach Anspruch 5, bei dem das Batteriegehäuse auf eine Temperatur von 55 °C bis 65 °C erwärmt wird.

7. Verfahren nach Anspruch 1, ferner umfassend das Durchführen einer Alterung nach dem primären Einspritzen des Elektrolyten und vor dem Ausüben des Drucks während des Durchführens des Bildungsprozesses.

8. Verfahren nach Anspruch 7, bei dem beim Durchführen der Alterung eine Temperatur für die Alterung 20 °C bis 30 °C beträgt.

9. Verfahren nach Anspruch 1, bei dem beim sekundären Einspritzen des Elektrolyten ein im Batteriegehäuse (12) verbleibendes Gas nach außen abgegeben wird.

## Revendications

1. Procédé de fabrication d'une batterie rechargeable (1), le procédé consistant à :
(S101) recevoir un ensemble d'électrodes, dans lequel des électrodes et des séparateurs sont empilés en alternance, dans un boîtier de batterie de type boîte (12) ;
(S102) premièrement, injecter un électrolyte par l'intermédiaire d'un orifice d'injection (111) ;
(S103, S104) appliquer une pression au boîtier de batterie (12) pendant l'exécution un processus de formation dans un état dans lequel le trou d'injection (111) est ouvert ;
(S105) deuxièmement, injecter l'électrolyte par le trou d'injection (111) ; et
fermer le trou d'injection (111),
dans lequel l'ensemble d'électrodes est un ensemble d'électrodes de type à empilement dans lequel au moins des parties des électrodes et des séparateurs sont stratifiées ; et
dans lequel l'application de la pression pendant l'exécution du processus de formation consiste à :
(S103) appliquer une pression primaire étant une première pression pendant l'exécution d'un processus de formation primaire ;
(S104) appliquer une pression secondaire étant une seconde pression qui est supérieure à la première pression pendant l'exécution d'un processus de formation secondaire ; et
dans lequel la pression primaire et la pression secondaire sont appliquées à la batterie rechargeable 1 en utilisant un dispositif de montage 2.

2. Procédé selon la revendication 1, dans lequel la première pression est de 49 kPa (0,5 kgf/cm²) à 98 kPa (1 kgf/cm²), et
dans lequel la seconde pression est de 441 kPa (4,5 kgf/cm²) à 980 (10 kgf/cm²).

3. Procédé selon la revendication 1, dans lequel, dans l'exécution du processus de formation primaire, un taux de chargement est égal ou inférieur à 23 %.

4. Procédé selon la revendication 3, dans lequel, dans l'exécution du processus de formation secondaire, un taux de chargement est égal ou inférieur à 70 %.

5. Procédé selon la revendication 1, dans lequel, dans l'application de la pression pendant l'exécution du processus de formation, le boîtier de batterie est chauffé.

6. Procédé selon la revendication 5, dans lequel le boîtier de batterie est chauffé à une température de 55°C à 65°C.

7. Procédé selon la revendication 1, consistant en outre à effectuer un vieillissement après la première injection de l'électrolyte et avant l'application de la pression pendant l'exécution du processus de formation.

8. Procédé selon la revendication 7, dans lequel, dans l'exécution du vieillissement, une température pour le vieillissement est de 20°C à 30°C.

9. Procédé selon la revendication 1, dans lequel, dans la deuxième injection de l'électrolyte, un gaz restant dans le boîtier de batterie (12) est évacué vers l'extérieur.
